Europäisches Patentamt

European Patent Office

Office européen des brevets

(11) Publication number: **0 213 645**
**A1**

(12) **EUROPEAN PATENT APPLICATION**

(21) Application number: **86200802.6**

(22) Date of filing: **06.05.86**

(51) Int. Cl.⁴: **A47J 31/42**

(30) Priority: **09.05.85 BE 214987**

(43) Date of publication of application:
**11.03.87 Bulletin 87/11**

(84) Designated Contracting States:
**AT BE CH DE FR GB IT LI LU NL SE**

(71) Applicant: **S.A. Innovi N.V.**
**Brabant Building Wetstraat 23 bus 7**
**B-1040 Brussels(BE)**

(72) Inventor: **Brandt, Roger Oscar**
**No. 51, Romanie Van Dijckstraat**
**B-1070 Brussels(BE)**

(74) Representative: **Konings, Lucien Marie**
**Cornelis Joseph et al**
**OCTROOIBUREAU ARNOLD & SIEDSMA**
**Sweelinckplein 1**
**NL-2517 GK Den Haag(NL)**

(54) **An apparatus for preparing coffee.**

(57) In an apparatus for the preparation of coffee, roasting means (1) for the roasting of raw beans, grinding means (9) for the grinding of the roasted beans and extracting means (16) for the extraction of coffee from the ground coffee are combined into a single unit (28).

FIG. 1

## An Apparatus for preparing coffee

This invention relates to an apparatus for preparing coffee, comprising a roasting means for roasting the raw beans, a grinding means for grinding the roasted beans to ground coffee and an extraction means for extracting coffee from the ground coffee.

In the known apparatus, the fresh beans are usually roasted long in advance in a separate apparatus. This means a considerable loss of coffee-aroma.

The invention has as its aim to reduce the loss of coffee-aroma. This is achieved in accordance with the invention using an apparatus as indicated in the heading having the characteristic that the roasting means, grinding means and extracting means are constructed together to form a coffee-preparing unit. With an apparatus of the kind it is possible to prepare the coffee in a short time after the roasting. The loss of coffee aroma is hereby definitely reduced. Since the aroma loss is limited, less coffee beans are required per cup of coffee, and/or the coffee tastes better.

The cited and other characteristics of the invention will be elucidated by reference to drawings in the following exemplary description.

In the drawings:

Figure 1 shows a schematic representation of an apparatus according to the invention,

Figure 2 shows a perspective view of another apparatus according to the invention,

Figure 3 shows a cross section through the plane III-III of figure 2, and

Figure 4 and 5 show cross sections through planes IV-IV and V-V respectively of figure 3.

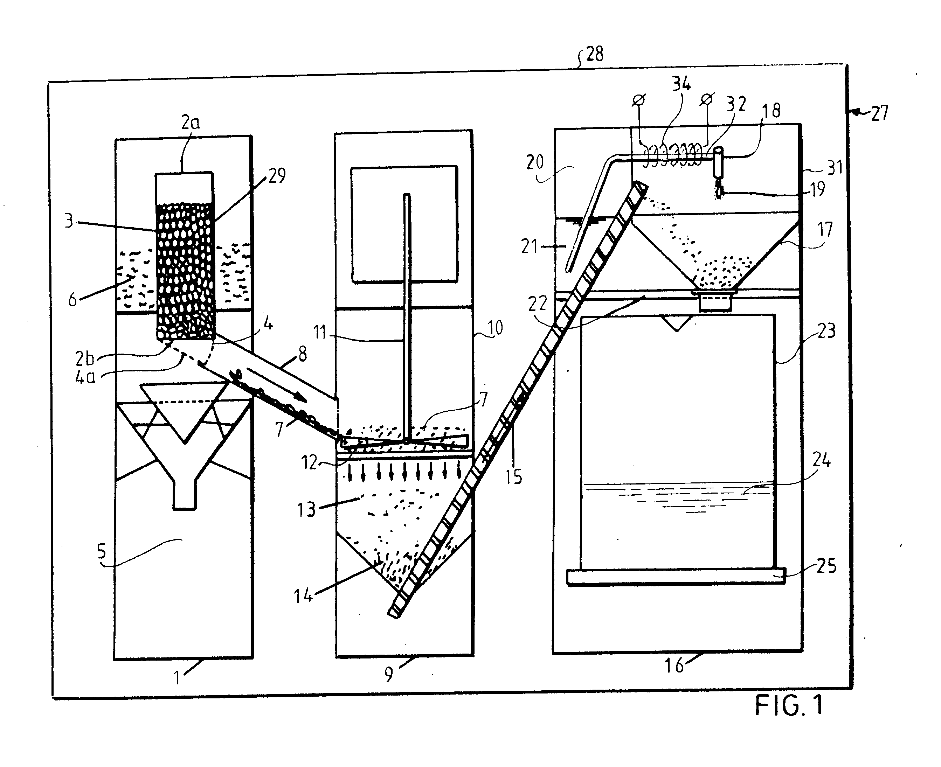

In apparatus 27 of figure 1, which is particularly suitable for domestic usage, there is mounted in all-enclosing casing 28 a roaster 1, comprising a cylindrical roasting holder 2, closed off from the atmosphere by means of housing 29, which roasting holder is open at its top end 2a for the loading of raw coffee-beans 3, and which is closed at its bottom end 2b by hinged flap 4 which is provided with small holes 4a which allow passage of hot air from a heating apparatus 5, which hot air comes indirectly from heating apparatus 5 into contact with raw coffee beans 3, which ensures the roasting thereof in the per se known manner and also the internal agitation and the associated transportation of husks 6 upwards and out of the roasting holder. Hinged flap 4 can serve as a closing-off or opened door each time the user wishes to take roasted coffee-beans 7 out of roasting holder 2.

As soon as raw coffee-beans 3 have been roasted to roasted beans 7, hinged flap 4 is automatically opened, whereby roasted beans 7 are received by conduit 8, which leads them to, closed off from the atmosphere, grinding holder 10 of grinder 9. In the bottom of grinding holder 10 there is fitted grinding element 11 with blades 12 or some other grinding element, with which roasted beans 7 can be ground to ground coffee 14. Beneath grinding holder 10, collection holder 13 receives the ground coffee.

In another embodiment, it is also conceivable that grinding element 11 is fitted in the top of grinding holder 10 and that, supplied from above, roasted coffee beans 7 are ground there and ground coffee 14 is collected in grinding holder 10.

Ground-coffee conveying means 15, for example a screw, convey ground coffee 14 upwards to, sealed from the atmosphere, extraction holder 31 of coffee-extractor 16 which has a conical bottom 17. This bottom 17 is a filter or is lined with a filter, not drawn, of paper or other suitable filter material. Above this bottom 17 there is arranged sprayer 18 of water-vapour or hot water, which sprayer 18 is connected via conduit 32 to water-reservoir 20 filled with water 21. Water-tank 20 is situated above electric heater 22 which brings water 21 to the boil. Water 21 can also be heated in conduit 32 by means of electric winding 34 fitted around conduit 32.

Beneath extraction container 31, coffee-reservoir 23 receives the prepared liquid, drinkable coffee, while electric heating means 25 is fitted underneath it to keep prepared coffee 24 warm.

Within the scope of the invention there are numerous variation possible, for example in relation to the conveying of beans 7 and ground coffee 14 between roaster 1, grinder 9 and extractor 16, in relation to the automatic control means and the embodiment thereof, and also in relation to the execution of roaster 1, grinder 9 and extractor 16. The variations can depend on the kind of usage of apparatus 27, for example for domestic use for making ten to fifteen cups, for personal use for making one to four cups or for making ten to fifty times as many cups in commercial, collective usage with substantial trade, such as in cafeterias. The extraction process is carried out in a relatively short time, by preference immediately, for a specific quantity of drinkable coffee 24, the extraction whether continuous or per cup taking place in the manner of a percolator, espresso or any other manner of extraction.

In cases where the preparation of coffee occurs with short intervening pauses, it is conceivable that a substantial quantity of raw beans 3 is roasted and that a fraction thereof is repeatedly separated and ground, and that one or two cups of coffee 24 are prepared on each occasion, while water 21 is kept continuously at boiling point. It is also conceivable that the entire filling of raw beans 3 is roasted and ground and that a fraction of ground coffee 14 is repeatedly removed from there to prepare a small number of cups of coffee 24.

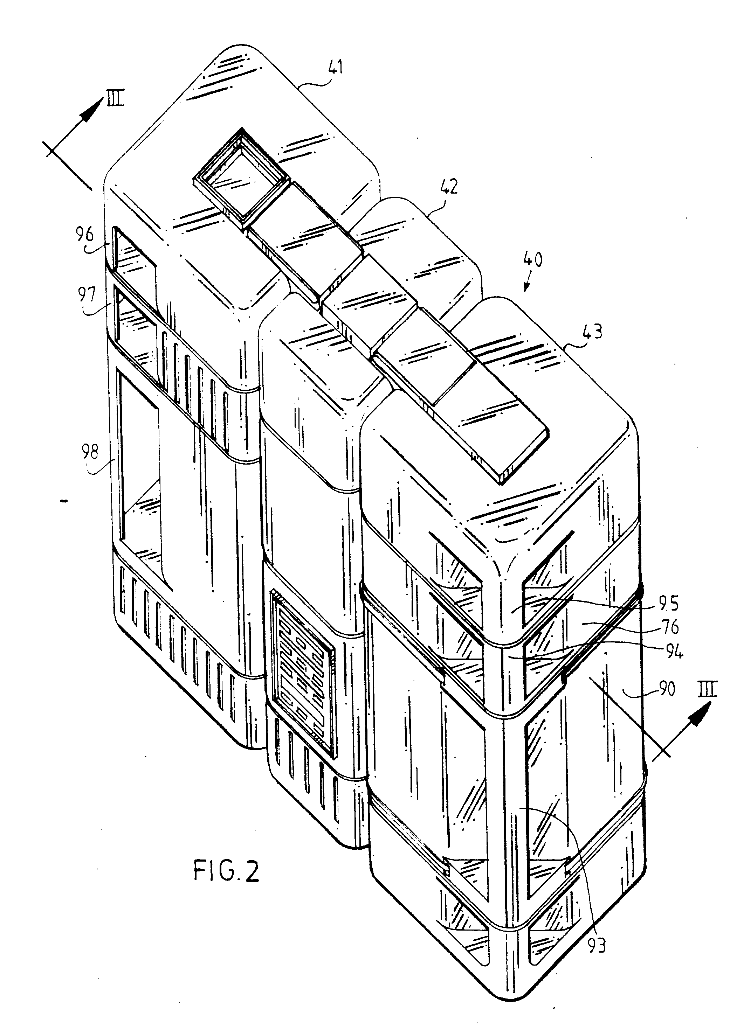

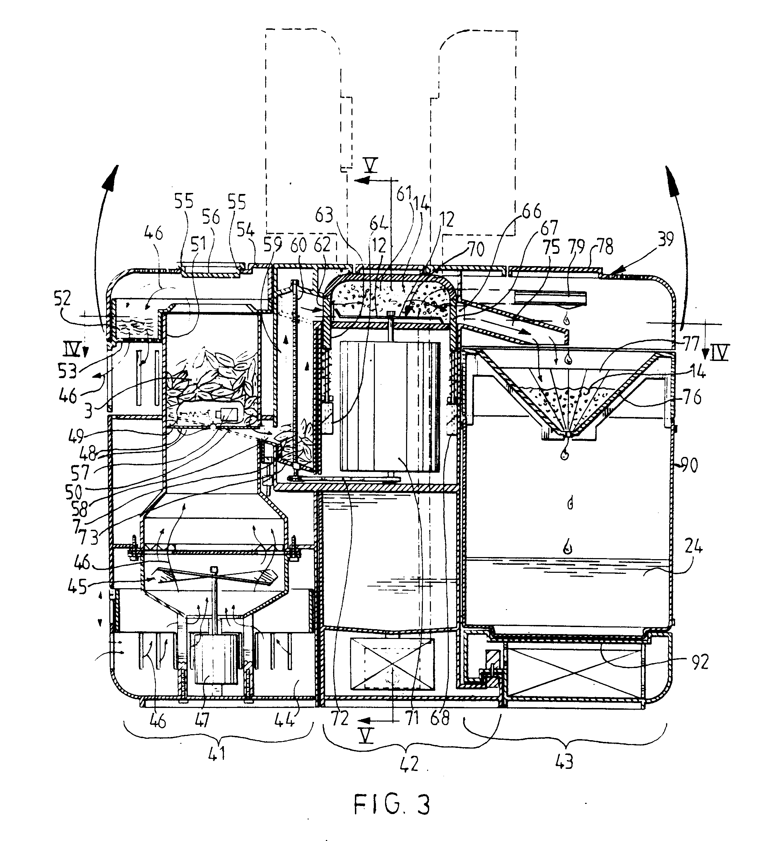

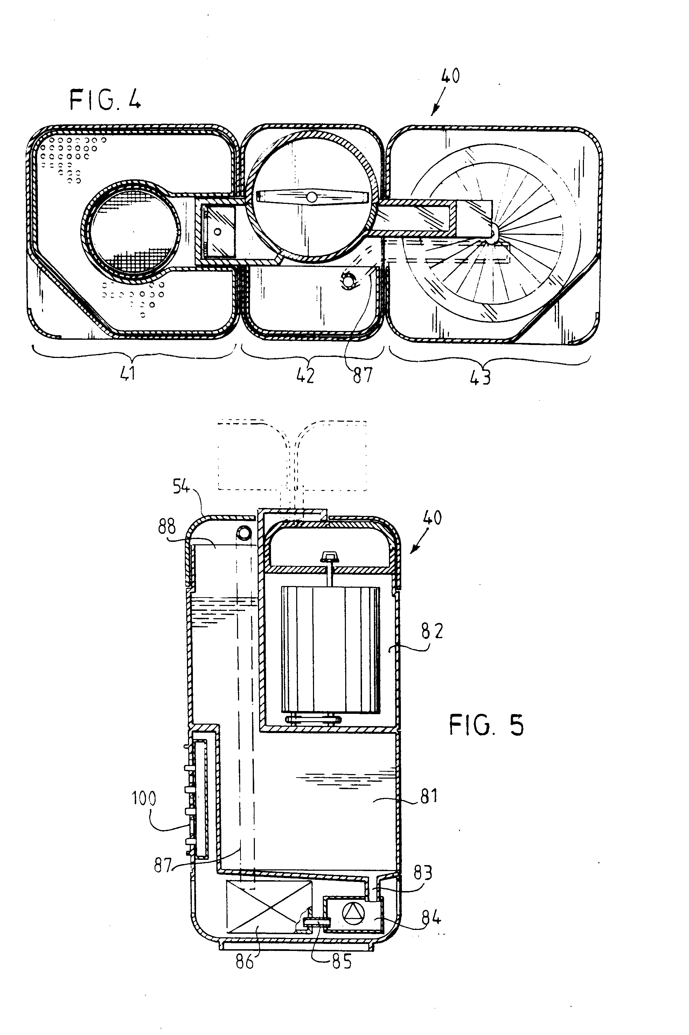

The apparatus embodied as a coffee preparation unit 40 of figures 2 to 5 comprises roaster 41, grinder 42 and coffee-extractor 43, each of which is embodied as a parallelepiped-shaped with rounded corners casing portion of casing 39, and which are combined to form an attractive unit. Roaster 41 comprises fan 45 driven by electric motor 47 which expels air following arrows 46 through an electric heater through small holes 48 in bottom 49 with hinge-flap 50, through raw beans 3 held in roasting holder 51 and then via husk-box 52 with sieve 53 to the outside. Above husk-box 52 there is pivotably fitted hinged lid 54, such that when lid 54 is in the hinged open position, husk-box 52 can be taken out and emptied. In hinge lid 54 there is present a, closable with lid 56, filling aperture 55 for filling the roasting holder with raw beans 3.

Hinged flap 50 can be hinged downwards, to the discharging position drawn with dashed lines, by means of relay 57 so that roasted beans 7 slide via chute 58 into conveyor conduit 59 and are there transported upwards by means of conveyor screw 60 into grinding holder 61, entry 62 then standing open through slide 63, operable by relay 64, having been moved downwards. Exit 66 of grinding holder 61 is then held closed by means of slide 67 which can be opened downwards by action of relay 68. Grinding holder 61 has grinding element 70 which is driven by electric motor 71, which also drives via belt-drive 72 screw 60, which screw 60 drives upwards obliquely-inclined impeller 73 and the raw beans which are situated above it. The forced-up roasted coffee-beans 7 slide via opened entrance 62 into the grinding holder 61.

After the grinding operation, exit 66 is opened, whereby ground coffee 14 slides through chute 15 into extraction holder 76, which is lined with paper filter element 77. Above extraction holder 72 there is present hinged lid 78, whereby extraction unit 43 can be opened for insertion and removal of filter element 77, with or without exhausted coffee-grounds. Above infusion-holder 72 there is arranged sprayer 79. Cold-water reservoir 81 extends behind and under motor-space 82 of grinder 42. There thus results a pleasingly compact, symmetrical construction, grinder 42 also serving as water provider. Exit 83 of this reservoir 81 is connected to thereunder situated water pump 84, which conveys cold water via conduit 85 to water-boiling heater 86, which is connected via conduit 87 to sprayer 79. Water-reservoir 81 can be filled, when hinged lid 54 is open, from above via entrance 88. In extraction holder 76, ground coffee is subjected to extraction by a filter process, and coffee 24 falls via exit 89 into coffee-pot 90, which is situated beneath extraction holder 76 on electric warming-plate 92. Coffee-pot 90 has external ear 93 which forms a stylized rib of apparatus 40. Extraction holder 72, hinged lids 54, 78 and husk-box 52 are also provided with similar ears 94, 95, 96 and 97 respectively, while roaster 91 is also provided with rib 98 corresponding to ear 93.

The coffee-preparation process, including roasting, grinding and extracting, is controlled by means of not-shown automatic controlling means, which successively activate and deactivate the various heating elements, motors and relays at the required moments.

It is thus possible, in accordance with the invention, to roast the quantity of raw beans 3 appropriate to the quantity and/or strength of the coffee to be consumed a short time before the extraction of the coffee, whereby a maximum of aroma is retained since little time elapses between roasting and extraction and since the roasted coffee remains continuously closed off, in principle, from the atmosphere. In situations of fairly continuous usage, such as in coffee-bars, restaurants and canteens, the creation of small reserves of roasted beans, ground coffee and/or hot water is possible.

## Claims

1. An apparatus (27, 40) for preparing coffee, comprising a roasting means (1, 41) for roasting raw beans (3), a grinding means (9, 42) for grinding the roasted beans to ground coffee (14) and an extraction means (16, 43) for extracting coffee from the ground coffee (14), characterized in that the roasting means (1, 41), grinding means (9, 42) and extracting means (16, 43) are constructed in combination as a coffee-preparing unit (28, 39).

2. An apparatus (27, 40) as claimed in claim 1, characterized by bean-transferring means (8, 60) for transferring roasted coffee-beans (7) from a roasting holder (2, 41) of the roasting means (1, 41) to a grinding holder (10, 61) of the grinding means (9, 42).

3. An apparatus (27, 40) as claimed in claims 2 or 3, characterized in that automatic operating means (100) activate the roasting means (1, 41), the grinding means (9, 42) and the extracting means (16, 43).

4. An apparatus (27, 40) as claimed in one of the preceding claims, characterized in that automatic operating means (100) activate the roasting means (1, 41), the grinding means (9, 42) and the extracting means (16, 43) with a common starting means for the processing of the coffee-beans (3) and the ground coffee (14) in directly successive steps.

5. An apparatus (27, 40) as claimed in one of the preceding claims, characterized in that the the roasting means (1, 41), the grinding means (9, 42) and the extracting means (16, 43) are arranged adjacently in a common casing (28, 39), and that the roasting holder (2, 51), the bean transferring means (8, 60), the grinding holder (10, 61), the ground coffee conveying means (15, 75) and the extraction holder (17, 76) are in principle shut off from the atmosphere.

6. An apparatus (27, 40) as claimed in one of the preceding claims, characterized in that the the roasting holder (2, 51) and/or the automatic operating means (100) is/are provided with measuring means which correspond to the dimensioning of the extracting means (16, 43).

7. An apparatus (27, 40) as claimed in one of the preceding claims, characterized in that the the roasting holder (2, 51) has a volume for the accommodation of a quantity of raw beans (3) whereof a quantity of ground coffee (14) is obtained which is necessary for the filling for a coffee-extractor (16, 43) of the extraction holder (17, 76).

8. An apparatus (27, 40) as claimed in one of the preceding claims for the roasting of raw coffee-beans (3) in a continuous process, the grinding of roasted coffee-beans (7) and the extraction of coffee from ground coffee (14). characterized by:

an enclosed roasting holder (2, 51) formed principally by a cylinder open at its top end which is arranged above a heating means (5, 44), which provides an upwards circulation of warm air in the roasting holder (2, 51);

a conduit which forms the passage for roasted coffee-beans (7) to a closed grinding holder (10, 61), which grinding holder (10, 61) is provided with grinding means (9, 42), for example a rotatable grinding element with blades (12);

and ground-coffee transportation means (75) for the conveying of ground coffee (14) to an extraction holder (17, 76), which is provided at its top with a sprayer (18, 79) for the supplying of hot water or water vapour (19) and is provided with filtering means (77) and an exit (89) for prepared coffee - (24).

9. An apparatus (40) as claimed in one of the preceding claims, characterized in that the the coffee preparation unit (40) is composed of three combined constructional elements (41, 42, 43), whereof a first constructional element (41) comprises the roasting means (44, 45, 47, 51), a second constructional element (42) comprises the grinding means (70, 61) and also the water-provision means (81, 84, 86) and a third constructional element (43) comprises the extraction means (76, 79) and drinkable coffee collection-means (90).

10. An apparatus (40) as claimed in one of the preceding claims, characterized in that ears (93, 94, 95, 96 and 97) of a coffee-pot, an extraction holder and of a husk-box (52) are formed by casing ribs of the coffee-preparation unit (39).

FIG.1

0 213 645

FIG.2

FIG. 3

FIG. 4

40

41    42    87    43

54

88

40

82

100

87

81

83

84

85

86

FIG. 5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-3 153 377 (BOSAK) <br> * Whole document * | 1-8 | A 47 J 31/42 |
| X | US-A-1 896 230 (FARAGO) <br> * Whole document * | 1-5 | |
| X | US-A-1 604 058 (MAGER) <br> * Whole document * | 1,2,5 | |
| X | GB-A- 860 894 (SPEZIAL TECHNIK) <br> * Whole document * | 1-4,6-9 | |
| X | AT-B- 372 834 (WOEGINGER) <br> * Whole document * | 1 | |
| X | GB-A- 140 139 (CAPPELLI) <br> * Whole document * | 1 | **TECHNICAL FIELDS SEARCHED (Int. Cl.4)** <br><br> A 47 J <br> A 23 N |
| X | FR-A- 761 312 (MUNOZ DE VARGAS) <br> * Whole document * | 1 | |
| A | US-A-4 494 314 (GELL Jr.) <br> * Whole document * | 5 | |
| A | FR-A-2 188 987 (SEB) <br> * Whole document * | 5 | |

The present search report has been drawn up for all claims

| Place of search | Date of completion of the search | Examiner |
|---|---|---|
| THE HAGUE | 18-08-1986 | SCHARTZ J. |